# EUROPEAN PATENT APPLICATION

(11) **EP 2 290 360 A1**
(43) Date of publication of application: **02.03.2011**
(21) Application number: 09770105.6
(22) Date of filing: 22.06.2009
(51) Int. Cl.: G01N 31/00, G01N 21/81, G01N 31/22

(54) **MOISTURE INDICATOR AND METHOD FOR PRODUCING THE SAME**

(30) Priority: 25.06.2008 JP 2008165327; 25.06.2008 JP 2008165328
(71) Applicant: Kyodo Printing Co., Ltd., Tokyo 112-8501 (JP)
(72) Inventor: NAKATSUBO Kunio, Tokyo 112-8501 (JP); OGAWA Tatsuya, Tokyo 112-8501 (JP); OTOMO Hitoshi, Tokyo 112-8501 (JP)
(74) Representative: Brookes Batchellor LLP
(86) International application number: PCT/JP2009/061282
(87) International publication number: WO 2009/157395

(57) **Abstract**

A humidity indicator comprising a coloration composition, which contains a deliquescent material, supported on a porous base material, wherein the adhesion of the coloration composition, which has been once printed and thus adhered to the base material, to a member or the like of a printer is inhibited in a production process to thereby reduce printing errors and the maintenance frequency of the printer. Furthermore, blocking which occurs in stacking multiple humidity indicators can be prevented. Beads (3) not reacting with the constituting components of the coloration composition (4) are dispersed into the coloration composition to form convex portions. Further, the coloration composition (4) is coated with a top coat layer (5) comprising beads (6) dispersed in a resin (7).

## Description

### TECHNICAL FIELD

The present invention relates to a humidity indicator which undergoes a color change such that an increase in humidity is visible easily, and a method for producing the same.

### BACKGROUND ART

As a desiccant which is sealed in a commodity package, a silica gel-containing pouch has been used conventionally, and the pouch has therein cobalt chloride-impregnated silica gel which is called blue gel as an indicator used to know a dry state. But, since the cobalt is a heavy metal, a cobalt-free humidity indicator has been desired in terms of environments.

Accordingly, the present applicant has proposed in Patent Reference 1 a humidity indicator which has a coloration composition comprising an electron donative coloration compound, an acidic compound which is solid at ambient temperature, a substance having deliquescent property and a resin binder adhered to a substrate such as a nonwoven fabric. The above humidity indicator indicates an increase in humidity as the substance having deliquescent property is deliquesced by moisture around it, and the electron donative coloration compound is discolored or decolorized by the moisture.

### Prior Art Reference

### Patent Reference

Patent Reference 1: JP-A 2007-316058

### SUMMARY OF THE INVENTION

### Problems to be Solved by the invention

In a case where the humidity indicator proposed in Patent Reference 1 is mass-produced, it is produced by printing on a substrate a coating for the humidity indicator, which comprises at least an electron donative coloration compound, an acidic compound which is solid at ambient temperature, a substance having deliquescent property and an aqueous resin emulsion or an aqueous solution of a water-soluble polymer compound, by roll-to-roll continuously according to a gravure method or the like, and cutting into a given size.

Here, since the above coating contains the substance having deliquescent property, the coloration composition absorbs the ambient moisture to become sticky if the ambient moisture increases after the printed coating is dried, and the coloration composition adheres to a roll surface to which the print side is contacted, resulting in a possibility of causing a printing failure such as printing unevenness or printing omission. Since the coloration composition contains the acidic compound, there was a possibility of causing corrosion or the like of the rolls, to which the coloration composition adhered, by a chemical reaction between the moisture absorbed by the substance having deliquescent property and the acidic compound, and it was necessary to perform frequent maintenance of the coloration composition-adhered rolls.

In addition, when a plurality of the above humidity indicators were stacked, there was also a problem of causing blocking because the substance having deliquescent property was contained in the coloration composition, and the coloration composition of one of the mutually stacked humidity indicators adhered to the back surface of the other.

The present invention solves the above problem and provides a method capable of producing a humidity indicator efficiently by inhibiting the adhesion of a coloration composition, which has been once printed and adhered to a substrate, to a member of a printer or the like in a production process of the humidity indicator, to prevent a printing failure and also to reduce the maintenance frequency of the printer, and provides a humidity indicator according to the above method. The present invention also has an object to prevent blocking at the time when a plurality of the printed humidity indicators is stacked.

### Means for Solving the Problem

A first humidity indicator of the present invention is a humidity indicator, wherein a coloration composition comprises at least an electron donative coloration compound, an acidic compound which is solid at ambient temperature, a substance having deliquescent property and a resin binder, the electron donative coloration compound reacts with the acidic compound to exhibit a prescribed color, a print layer has beads dispersed in the coloration composition and is supported on a base material, and the print layer has convex portions of the beads on its surface.

The first humidity indicator of the present invention includes as preferable embodiments that the base material is porous, the beads are formed of a material which does not react with any constituting components of the coloration composition, a resin film is laminated on the back surface of the base material, the humidity indicator has a top coat layer which is formed of a resin covering at least the print layer, the top coat layer has the beads dispersed into the resin and has the convex portions formed of the beads on its surface, a moisture permeability adjustment layer formed of a resin is additionally laminated on an outermost surface on the print layer side of the humidity indicator, and a chromatic color ink layer is arranged between the print layer and the base material.

A method for production of the first humidity indicator of the present invention comprises printing on a base material a coating for a humidity indicator, which comprises at least an electron donative coloration compound, an acidic compound which is solid at ambient temperature, a substance having deliquescent property, beads and an aqueous resin emulsion or an aqueous solution of a water-soluble polymer compound, and heating to dry to form a print layer which has the beads dispersed in the coloration composition.

The method for production of the first humidity indicator of the present invention includes as preferable embodiments that the base material is porous, the beads are formed of a material which does not react with any constituting components of the coating for the humidity indicator, the coating for the humidity indicator contains an aqueous resin emulsion or a cross-linking agent for a water-soluble polymer, a resin film is previously laminated on the back surface of the base material, the coating for the humidity indicator is printed on the base material and heated to dry and a resin matrix in which the print layer is insoluble is coated to cover at least the print layer to form a top coat layer of a rein, and the beads are dispersed in the resin matrix.

A second humidity indicator of the present invention is a humidity indicator, wherein a print layer formed of a coloration composition, which comprises at least an electron donative coloration compound, an acidic compound which is solid at ambient temperature, a substance having deliquescent property and a resin binder, and in which the electron donative coloration compound reacts with the acidic compound to exhibit a prescribed color, is supported on a base material, the print layer is covered with a top coat layer which has beads dispersed in a resin, and the top coat layer has convex portions formed by beads on its surface.

The second humidity indicator of the present invention includes as preferable embodiments that the base material is porous, a resin film is previously laminated on the back surface of the base material, a moisture permeability adjustment layer which is formed of a resin is further laminated on the top coat layer, and a chromatic color ink layer is arranged between the print layer and the base material.

A method for production of the second humidity indicator of the present invention comprises printing on a base material a coating for the humidity indicator, which comprises at least an electron donative coloration compound, an acidic compound which is solid at ambient temperature, a substance having deliquescent property and an aqueous resin emulsion or an aqueous solution of a water-soluble polymer compound, heating to dry it to form a print layer which is formed of a coloration composition, and applying a resin matrix, in which the print layer is insoluble, with beads dispersed therein to cover at least the print layer to thereby form a top coat layer which has the beads dispersed in the resin.

The method for production of the second humidity indicator of the present invention includes as preferable embodiments that the base material is porous, and a resin film is previously laminated on the back surface of the base material.

### Effects of the Invention

According to the first humidity indicator of the present invention, the convex portions are formed by the beads on the front surface of the coloration composition printed on the base material, so that when the print side comes into contact with a member or the like of a printer, adhesion of the coloration composition to the member surface is substantially inhibited. According to the present invention, a printing failure is inhibited, the maintenance frequency of the member is also reduced, and the humidity indicator can be produced efficiently.

Even when multiple humidity indicators are stacked, the back surface of one of the mutually stacked humidity indicators is hard to adhere to the print side of the other humidity indicator by virtue of the presence of the convex portions, and blocking can be reduced.

According to the present invention, the additional formation of the top coat layer on the print layer covers the coloration composition of the bead surfaces by the top coat layer, and blocking after the production can be prevented more efficiently. Especially, when the beads are added to the top coat layer in combination with the second humidity indicator, the beads in the top coat layer are also arranged in an area not having the beads which are in the coloration composition, and blocking can be prevented more highly.

According to the second humidity indicator of the present invention, the print layer formed of the coloration composition containing the substance having deliquescent property is covered with the top coat layer, so that even when the multiple humidity indicators are stacked, the back surface of one of the mutually stacked humidity indicators is not directly contacted with the coloration composition of the print layer of the other. In addition, the beads are dispersed in the top coat layer and the convex portions are formed by the beads on the front surface, so that a contact area between the back surface and the other top coat layer itself is small, and blocking can be prevented.

### BRIEF DESCRIPTION OF THE DRAWINGS

FIG. 1 is a schematic sectional view of one embodiment of a first humidity indicator of the present invention.
FIG. 2 is a schematic sectional view of an embodiment having the first humidity indicator of the present invention provided with a top coat layer.
FIG. 3 is a schematic sectional view of one embodiment of a second humidity indicator of the present invention.
FIG. 4 is a schematic sectional view of an embodiment combining the first humidity indicator and the second humidity indicator of the present invention.
FIG. 5 is a schematic sectional view of an embodiment having the first humidity indicator of the present invention provided with a chromatic color ink layer.
FIG. 6 is a schematic sectional view of an embodiment having the second humidity indicator of the present invention provided with a chromatic color ink layer.
FIG. '7 is a schematic sectional view of an embodiment having the humidity indicator of FIG. 4 provided with a moisture permeability adjustment layer.
FIG. 8 is a schematic sectional view of an embodiment having the humidity indicator of FIG. 3 provided with a moisture permeability adjustment layer.

### MODE FOR CARRYING OUT THE INVENTION

A humidity indicator and a production method of the same of the present invention are described in detail below.

First, a first humidity indicator of the present invention and a production method of the same are described in detail referring to an example of production using a printer according to a roll-to-roll method.

The first humidity indicator of the present invention has a print layer, which has beads dispersed in a coloration composition, supported on a base material and is produced by printing on the base material an aqueous coating for the humidity indicator, which contains prescribed components and the beads, and heating to dry.

As the base material used in the present invention, any material can be used if it can support the coloration composition containing the components of the coating in the surface and interior of the base material by adhering a water-based coating and heating to dry it. But a porous base material such as paper, cloth, a nonwoven fabric or the like is preferable, but since paper has disadvantages of paper dust and pH, a long-fiber nonwoven fabric is used preferably.

The base material used in the present invention is preferably used by previously stacking on its back surface a resin film, preferably a polyethylene terephthalate (PET) film. It is because when the humidity indicator of the present invention is produced by printing according to the roll-to-roll method, tension and heat of an oven are applied to the base material, and it is stretched easily, and the stretched base material shrinks after printing to possibly cause an appearance failure. When the resin film is stacked on the back surface of the base material, the stretching is prevented even if the pension is applied to the base material. And, when the coating for the humidity indicator is printed on the base material, the coating can also be prevented by the resin film from exuding to the back surface. As a method of stacking the resin film on the back surface of the base material, a laminating method is used preferably.

The PET film to be stacked on the back surface of the base material according to the present invention has thickness of 4 µm to 100 µm preferably. When it is 4 µm or more, an effect of preventing the stretching of the base material can be obtained sufficiently, but when it is 100 µm or less, required air permeability of the humidity indicator is not disturbed.

The coloration composition according to the present invention comprises at least an electron donative coloration compound, an acidic compound which is solid at ambient temperature, a substance having deliquescent property and a resin binder, and has beads dispersed in the coloration composition to configure a print layer.

The electron donative coloration compound used in the present invention is not limited to a particular one if it is a compound which is caused to develop a color with an acid, but specifically, a leuco dye is used preferably. For example, a pH indicator which develops a color or causes a color change if acidified is used, a triarylmethane derivative, a fluoran derivative or the like. Specific examples are crystal violet lactone, 3-indolino-3-p-dimethylaminophenyl-6-dimethylaminophthalide, 3-diethylamino-7-chlorofluoran, 2-(2-fluorophenylamino)-6-diethylaminofluoran, 2-(2-fluorophenylamino)-6-di-n-butylaminofluoran, 3-diethylamino-7-cyclohexylaminofluoran, 3-diethylamino-5-methyl-7-tert-butylfluoran, 3-diethylamino-6-methyl-7-anilinofluoran, 3-diethylamino-6-methyl-7-p-butylanilinofluoran, 3-cyclohexylamino-6-chlorofluoran, 2-anilino-3-methyl-6-(N-ethyl-p-toluidino)-fluoran, 3-pyrrolidino-6-methyl-7-anilinofluoran, 3-pyrrolidino-7-cyclohexylaminofluoran, 3-N-methylcyclohexylamino-6-methyl-7-anilinofluoran, 3-N-ethylpentylamino-6-methyl-7-anilinofluoran, etc.

The acidic compound is not limited to a particular one if it is in a solid state at ambient temperature, but its examples include oxalic acid, malonic acid, citric acid, salicylic acid, benzoic acid, boric acid, p-toluenesulfonic acid and the like. Among them, oxalic acid, malonic acid and p-toluenesulfonic acid are desirable in terms of a high solubility in water. The "ambient temperature" according to the present invention denotes 20 degrees C. ±15 degrees C. (5 to 35 degrees C.) specified in Japanese Industrial Standards (JIS Z 8703).

The substance having deliquescent property is not limited to a particular one if it is a substance having deliquescent property, but it is preferably salts, and more preferably metallic salts. Examples of the substance having deliquescent property are magnesium chloride, sodium chloride, potassium chloride, calcium chloride, strontium chloride, barium chloride, magnesium nitrate, calcium nitrate, strontium nitrate, barium nitrate, magnesium bromide, and the like. Among them, it is desirable to use a substance having deliquescent property with less temperature dependence, because stable humidity indicating capability can be exerted regardless of a change in temperatures. Examples of the substance having deliquescent property with less temperature dependence include magnesium, chloride, sodium chloride, potassium chloride, and the like.

For a mixing ratio between the substance having deliquescent property and the acidic compound, it is preferably a substance having deliquescent property (as hydrate):acidic compound=200:1 to 1:5 at a weight ratio within the coating for the humidity indicator, and more preferably 100:1 to 1:2. And, a content of the electron donative coloration compound in the coating is preferably 0.05 to 20.0 wt. %, and more preferably 0.1 to 10.0 wt.%, in the coating prior to the addition of beads.

According to the present invention, the above-described electron donative coloration compound, acidic compound and substance having deliquescent, property are charged into an aqueous resin emulsion or an aqueous solution of a water-soluble polymer compound and stirred thoroughly to finely disperse and/or dissolve.

The resin emulsion is solidified by heating to dry at a level of not affecting on the base material so as to become a resin binder to support the above-described components and does not react with a substance having deliquescent property or an acidic compound, and it is not limited to a particular one if it is an aqueous emulsion which is not aggregated by the presence of the above components. And, a nonion emulsion is used preferably, and specifically an acrylic emulsion is used preferably. In addition, a weak anion emulsion or the like can be used preferably. The resin emulsion can be used appropriately in a state diluted with water, and a level of coloring of the humidity indicator can be adjusted by appropriately selecting an emulsion concentration.

As the water-soluble polymer compound, polyvinyl alcohol (PVA), polyvinylpyrrolidone (PVP) or hydroxyethyl cellulose (HEC) is used preferably, and it is preferably used as an aqueous solution of 1 to 20 wt. %. In a case where a water-soluble polymer compound such as polyvinyl alcohol is used, the water-soluble polymer compound elutes when the coloration composition absorbs moisture, and the coated surface might become sticky somewhat. Thus, the aqueous resin emulsion is used preferably in the present invention.

Especially, when the aqueous resin emulsion is used, the substance having deliquescent property is supplied in a state homogeneously dissolved into an aqueous solvent of the resin emulsion, so that the substance having deliquescent property is dispersed at a molecular level into a resin binder and also present in a fine and uniform state in the coloration composition. Therefore, the substance having deliquescent property is also deliquesced by a very small volume of moisture which is in contact with the coloration composition to enable to provide color change of the electron donative coloration compound. Besides, the coloration composition itself tends to absorb moisture when the resin emulsion is used.

According to the present invention, to firmly fix the beads to the base material, cross-linking agent for the above-described resin emulsion or the water-soluble polymer compound may be added to the coating for the humidity indicator. For example, when an acrylic emulsion is used as the resin binder, an oxazoline resin or an epoxy resin is preferably used as the cross-linking agent. The added amount of the cross-linking agent is 2 to 5 parts by weight with respect to 100 parts by weight of the resin emulsion or the aqueous solution of the water-soluble polymer compound.

Since the acidic compound which is solid at ambient temperature can be finely dispersed and/or dissolved homogeneously into an aqueous solvent such as an aqueous resin emulsion or an aqueous solution of a water-soluble polymer compound, the electron donative coloration compound can be made to uniformly and finely develop a color in the coating.

Thus, the coloration composition of the humidity indicator of the present invention can detect moisture in the air very sensitively.

By selecting an acidic compound having a high solubility into water or by enhancing dispersibility of the electron donative coloration compound into the coating, these components are finely dispersed into the resin binder, so that the physical strength of the resin binder can be enhanced, and the coloration composition can be made hard to separate from the base material.

The present invention includes as a preferable embodiment a configuration that an organic solvent is added to the above-described coating for a humidity indicator. As the organic solvent, a polar solvent which is soluble in water of 5 my/100 ml or more and vaporized by heating is used preferably. Specifically, one kind among methanol, ethanol, 1-propanol, 2-propanol, 1-butanol, 2-butanol, 2-methyl-1-propanol, tert-butyl alcohol, methyl ethyl ketone, ethyl acetate, tetrahydrofuran, cyclohexanone, acetone and acetonitrile or a mixture solvent containing at least one of them is used preferably.

The electron donative coloration compound, the substance having deliquescent property and the acidic compound are finely dispersed and/or dissolved in the aqueous resin emulsion or the aqueous solution of a water-soluble polymer compound before the addition of an organic solvent, so that the individual, components can be finely dispersed and/or dissolved uniformly into the coating as described above. The added amount of the organic solvent is preferably 10 to 100 parts by volume to a total of 100 parts by volume of the above-described electron donative coloration compound, substance having deliquescent property, acidic compound and aqueous resin emulsion or aqueous solution of the water-soluble polymer compound.

To the above-described coating may be added an antifoam agent and an antiseptic agent in a range not deteriorating the effects of the present invention, if necessary.

The beads used in the present invention are those which are formed of a material which does not react with the constituting components of the coloration composition, namely the constituting components of the coating for the humidity indicator. Specifically, the beads formed of acrylic resin, urethane resin or acrylic urethane resin are used preferably, and a grain diameter preferable to obtain the effects of the present invention is 1 µm to 10 µm in terms of volume average particle diameter. When it is less than 1 µm, it is hard to form convex portions having a size sufficient to prevent the contact between the coloration composition and the roll, and when it exceeds 10 µm, it is not desirable because the beads tend to separate from the coloration composition, and the coloration composition adheres together with the beads to the roll, and the separated beads might contaminate the commodity when the humidity indicator of the present invention is contained in a package for commodity.

And, the beads used in the present invention preferably do not affect on the color exhibited by the coloration composition, so that they are preferably formed of a colorless material. Their shape is preferable to have a smaller projected area to the surface of the base material such that the discoloration of the coloration composition is observed obviously, and therefore, a spherical shape is preferable.

The beads are added at a ratio of 1 to 20 wt. % into the coating for the humidity indicator containing all of the abode components. It is not desirable that when the amount of the beads is excessively small, the effect of preventing the contact between the coloration composition and the roll tends to become insufficient, and when it is excessively large, the area of the layer excluding the beads becomes small, and it might become difficult to know the discoloration of the coloration composition.

According to the present invention, the above-described coating for the humidity indicator is printed as a prescribed design on the base material and heated to dry so as to solidify the coloration composition, which is formed of the electron donative coloration compound contained in the coating, the substance having deliquescent property, the acidic compound and the resin binder derived from the resin emulsion or the water-soluble polymer, and the print layer with the beads dispersed in the coloration composition is supported on the base material to obtain the humidity indicator. The electron donative coloration compound reacts with the acidic compound within the coating for the humidity indicator to exhibit a prescribed color. Since the electron donative coloration compound is dried in the stated reacted with the acidic compound and contained in the coloration composition, the coloration composition exhibits the prescribed color obtained when the above-described electron donative coloration compound is reacted with the acidic compound. As a method of printing the above-described coating on the base material, gravure printing according to the roll-to-roll method is preferably used, but it is not exclusively limited in the present, invention.

As the heating method, an oven or the like can be used appropriately, A heating temperature and a heating time depend on the material of the base material and the coating composition, but heating is performed at preferably 40 to 150 degrees C., and more preferably 50 to 130 degrees C. though variable. It is also possible to support a prescribed amount of the coloration composition by repeating the adhesion of the coating and the heating to dry plural times. The amount of the coloration composition supported in the dried humidity indicator is preferably 0.3 to 100 g/m².

Printing and drying by heating may be performed repeatedly to enable to form the coloration composition layer (area other than the beads) having a prescribed thickness.

According to the present invention, when the base material is a porous base material, the coating for the humidity indicator enters the pores of the porous base material at the time of printing, so that the print layer covers the surface of the porous base material and also enters the pores of the base material to firmly integrate mutually.

The porous base material has irregularities on its surface, so that the beads in the coating are arranged to partially fit the concave portions on the surface of the porous base material, and the porous base material and the beads are firmly fixed by the coloration composition. Especially, when a nonwoven fabric is used as the base material, the beads are arranged to partly fit in the gaps between the fibers configuring the nonwoven fabric, and the fibers and the beads are mutually fixed by the coloration composition.

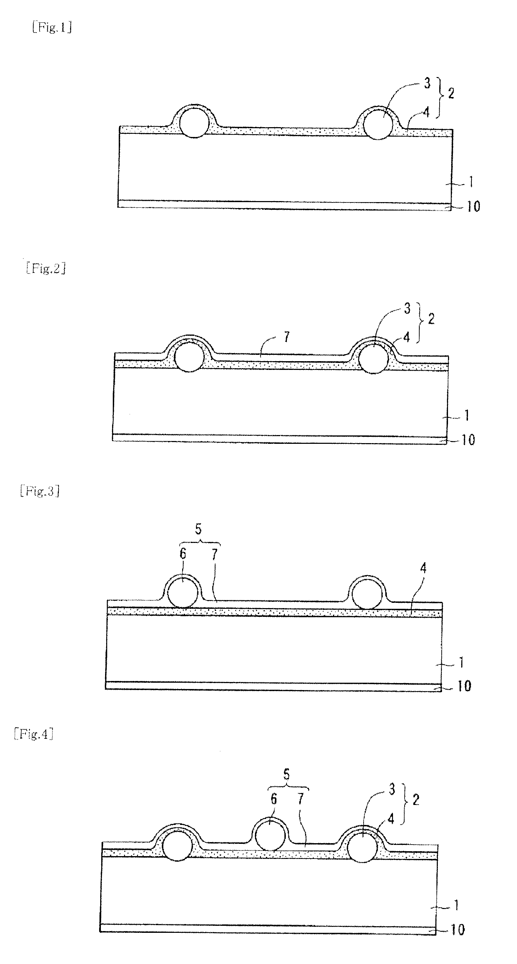

FIG. 1 is a schematic sectional view of a preferable embodiment of the humidity indicator of the invention, where 1 denotes a porous substrate, 2 denotes a print layer, 3 denotes beads, 4 denotes a coloration composition, and 10 denotes a resin film. As shown in FIG. 1, the coloration composition 4 covering the beads 3 becomes thinner than on the area other than the beads 3 because of its fluidity at the time of printing. Thus, even when the tops of the beads 3 are contacted with the rolls of the printer, the coloration composition adhering to the rolls is very small in amount. And, the coloration composition 4 of the area excluding the beads 3 has an increase thickness for the portions expelled by the beads 3, and the required thickness as the indicator is obtained easily.

The humidity indicator of the present invention obtained as described above exhibits a prescribed color as the electron donative coloration compound reacts with the acidic compound within the coloration composition which is supported by. the base material. And, when the moisture in the environment where the humidity indicator of the present invention is disposed increases and the substance having deliquescent property contained in the coloration composition is deliquesced by absorbing the ambient moisture, the reactant between the electron donative coloration compound and the acidic compound is deliquesced by the aqueous solution resulting from the deliquescence, and the color exhibited by the coloration composition is discolored (including decolorization). This color change indicates that the moisture in the environment where the humidity indicator is disposed has increased. The coloration composition which is discolored once can be restored easily to have the color before the discoloring by heating in an oven or the like.

According to the humidity indicator of the present invention, the adhesion of the coloration composition to the rolls during the production process is inhibited by the beads dispersed in the coloration composition and, even when the obtained humidity indicator is wound into a roll, the coloration composition on the front surface of one of the mutually stacked humidity indicators is inhibited from adhering to the back surface of the other, and blocking is reduced.

According to the present invention, to further improve the above-described blocking prevention effect, it is preferable that the coating for the humidity indicator is printed and heated to dry, and the resin matrix is applied to cover the print layer to thereby form the top coat layer. In a case where the porous base material has rough irregularity on its surface when a moisture permeability adjustment layer to be described later is formed on the surface and strength becomes poor when the moisture permeability adjustment layer is laminated on the print layer as it is, the surface irregularity of the porous base material is made uniform by the top coat layer by laminating the moisture permeability adjustment layer on the formed top coat layer. Thus, there is also obtained an effect of improving the laminate strength of the moisture permeability adjustment layer. As a method of forming the top coat layer, a known method such as gravure coating, wire bar coating or the like can be used.

The top coat layer is sufficient by simply covering the print layer, so that its thickness may be small. Thus, it is not required to be transparent but it is preferably transparent such that the discoloration of the coloration composition can be visually observed readily. And, it is necessary that the print layer is insoluble when the top coat layer is applied. As the resin matrix in which the print layer is insoluble, acrylic resin is preferably used. When the top coat layer is excessively thick, air permeability becomes low and the discoloration of the coloration composition by moisture is inhibited. Therefore, its thickness is preferably 50 µm or less.

FIG. 2 is a schematic sectional view of the structure that the humidity indicator of FIG. 1 is further provided with a top coat layer, where 7 denotes a resin. As shown in FIG. 2, the print layer 2 is completely covered with the resin 7, so that even when the humidity indicators are stacked, the back surface of one of them is not contacted with the coloration composition 4 of the other, and blocking is prevented more effectively.

The example using the printer of the roll-to-roll method was described above, so that the rolls were exemplified as a member of the printer to which the coloration composition is contacted, but the member to which the coloration composition is contacted according to the present invention is not limited to it. Any member which is contacted with the coloration composition after the coloration composition is formed by printing the coating for the humidity indicator onto the base material and drying by heating is also prevented from the adhesion of the coloration composition according to the present invention. The blocking was described referring to the example that the humidity indicator was wound into the roll, but the present invention is not limited to the above, and the same is also applied when a plurality of humidity indicators are stacked.

A second humidity indicator of the present invention and a production method of the same are described in detail below.

The second humidity indicator of the present invention is comprised of a print layer formed of a coloration composition supported on a base material, which is covered by a top coat layer having beads dispersed in a resin, and produced by printing on the base material a water-based coating for the humidity indicator containing prescribed components, drying by heating, and applying a resin matrix having the beads dispersed therein.

Structural differences between the second humidity indicator and the first humidity indicator described above according to the present invention are that the first humidity indicator has the beads dispersed in the coloration composition, and the second humidity indicator has the beads dispersed in the top coat layer. According to the present invention, they can be combined to configure a more preferable humidity indicator as described later.

For the second humidity indicator, the base material, the coating for the humidity indicator excluding the beads, and the process of forming the coloration composition by printing on the base material the coating for the humidity indicator and drying by heating are same as those for the first humidity indicator, and therefore their descriptions are omitted.

The top coat layer of the second humidity indicator is described blow.

The coloration composition according to the present invention contains a substance having deliquescent property, so that when the ambient moisture increases after the humidity indicators with the coloration composition exposed are produced and put in a multiple stacked state, the substance having deliquescent property is deliquesced to adhere the back surface of one of the mutually stacked humidity indicators to the coloration composition of the other to thereby cause blocking. According to the present invention, the print layer is covered with the top coat layer to prevent the coloration composition from exposing to the surface, and since the convex portions are formed on the top coat layer surface by the beads, the contact area between the back surface of one of the mutually stacked humidity indicators and the top coat layer of the other is very small, and blocking can be prevented.

In a case where a moisture permeability adjustment layer described later is to be formed on the front surface but the porous base material has rough irregularity on its surface and the strength becomes poor when the moisture permeability adjustment layer is laminated on the print layer as it is, lamination of the moisture permeability adjustment layer on the formed top coat layer also provides an effect of improving the laminate strength of the moisture permeability adjustment layer because the surface irregularity of the porous base material is made uniform by the top coat layer.

The top coat layer is sufficient by simply covering the print layer, so that the thickness of the resin portion may be small. Thus, it is not required to be transparent but it is preferably transparent such that the discoloration of the coloration composition can be visually observed readily. And, it is necessary that the print layer is insoluble when the top coat layer is applied. As the resin matrix in which the print layer is insoluble, acrylic resin is preferably used. When the resin layer is excessively thick, air permeability becomes low and the discoloration of the coloration composition by moisture is inhibited, and when it is excessively thin, the beads become easy to separate from the top coat layer. Therefore, the thickness of the resin layer is preferably 0.1 to 50 µm.

The beads dispersed in the resin are made of a material which does not react with a material forming the print layer or the resin matrix when the top coat layer is applied onto the print layer, and preferably colorless so that the discoloration of the coloration composition is visible easily. Specifically, the beads formed of acrylic resin, urethane resin or acryl ic urethane resin are used preferably. In addition, to form good convex portions, it is preferable that the beads have a volume average particle diameter of 1 to 10 µm. If it is less than 1 µm, the convex portions having an appropriate height cannot be formed, and if it exceeds 10 µm, they become easy to separate from the top coat layer, and when the humidity indicator of the present invention is contained in a package for commodity, the separated beads might contaminate the commodity, and it is not desirable. It is preferable that the beads are contained at 0.1 to 20 wt.% in the top coat layer.

As a method of forming the top coat layer according to the present invention, a known method such as gravure coating, wire bar coating or the like can be used.

Since the top coat layer is a member for preventing blocking resulting from the coloration composition, it merely covers the area (print layer) where at least the coloration composition is supported.

FIG. 3 is a schematic sectional view of the humidity indicator of the present invention, where 1 denotes a porous base material, 4 denotes a coloration composition, 5 denotes a top coat layer, 6 denotes beads, 7 denotes a resin, and 10 denotes a resin film. FIG. 4 shows an embodiment that the print layer 2 is formed with beads 3 dispersed into the coloration composition 4 by combining with the first humidity indicator. According to the structure of FIG. 4, the beads 6 are also arranged in the area other than that of the beads 3 of the print layer 2 to increase the number of beads per unit area.

According to the present invention, since the print side of the humidity indicator is covered with the top coat layer having the convex portions on its surface, blocking can be prevented from occurring when multiple humidity indicators are stacked. Therefore, blocking can be prevented finely even when the humidity indicator is wound into a rolled state as in a case that the printer of the roll-to-roll method is used for mass production of the humidity indicator of the present invention.

A more preferable embodiment of the humidity indicator of the present invention is described below.

As an embodiment that a moisture increase is detected more clearly by the humidity indicator of the present invention, a coloration composition which is decolorized by moistening is used, and a chromatic color ink layer having a color different from that of the coloration composition dried by heating is previously formed on the surface (the side on which the coating for the humidity indicator is printed) of the base material. For example, when the coloration composition is blue before it is moistened, a red ink is applied to the base material, and the ink layer is covered with the coloration composition. The coloration composition is blue when it is dry, and the coloration composition is decolorized when moisture increases, and the red ink layer covered with the coloration composition becomes visible. In other words, the humidity indicator changes its color from blue to red as moisture increases, so that the moisture increase is detected at a glance. When the ink layer is printed to have a prescribed design or characters, the moisture increase is detected more clearly.

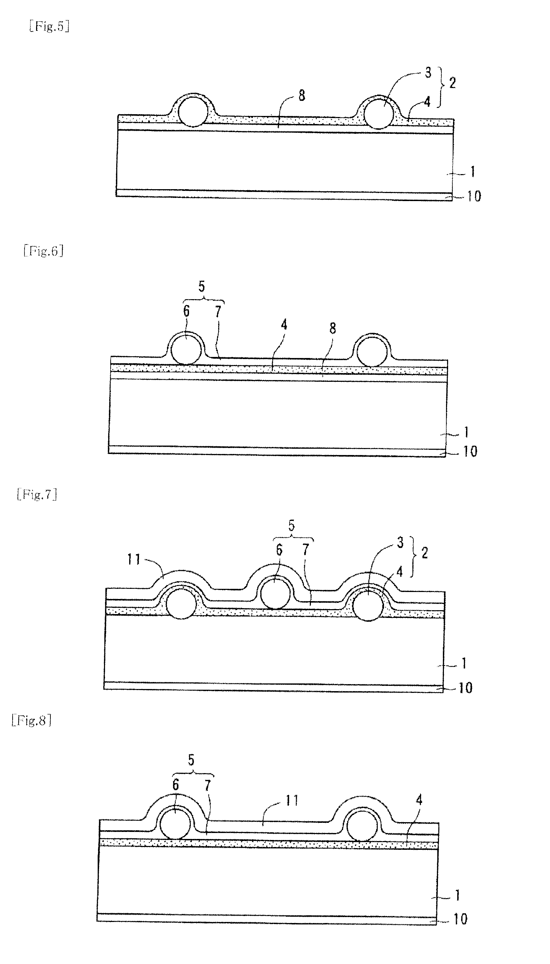

FIG. 5 is a schematic sectional view of a structure that the chromatic color ink layer is formed in the humidity indicator of FIG. 1, where 8 denotes a chromatic color ink layer. This embodiment may be configured by combining the top coat layer of FIG. 2 or FIG. 4. FIG. 6 is a schematic sectional view of a structure that the humidity indicator of FIG. 3 is provided with the chromatic color ink layer. The embodiment of FIG. 6 may be configured by combining the print layer 2 of FIG. 1.

For the humidity indicator of the present invention, it is preferable to apply an embodiment that an adhesive layer is formed on the back surface, the adhesive layer surface is covered with a release layer, the release layer is peeled off at the time of use, and the humidity indicator is attached by means of the adhesive layer to the inner surface of a packaging material for commodity or to a bag containing a desiccant agent. Otherwise, the humidity indicator of the present invention can also be used as it is as a storage bag for the desiccant agent. In such a case, the print layer is formed on only a part of the base material, and the base material is formed into a bag shape to contain the desiccant agent therein. As the desiccant agent, silica gel, which does not react with the coloration composition of the humidity indicator, is used preferably.

In addition, the humidity indicator of the present invention is preferably applied with an embodiment that the moisture permeability adjustment layer formed of a resin is stacked on the surface of the print side or on the top coat layer (on the print layer 2 of FIG. 1 or FIG. 5, on the resin 7 of FIG. 2, or on the top coat layer 5 of FIG. 3, FIG. 4 or FIG. 6) to control air permeability of the surface to thereby suppress a discoloration rate of the coloration composition due to a moisture increase. As the moisture permeability adjustment layer, a PET film which has appropriate air permeability and also has transparency such that the color change of the coloration composition is readily visible is used preferably, and its thickness is preferably in a range of bout 4 to 100 µm. FIG. 7 is a schematic sectional view of an embodiment that a moisture permeability adjustment layer 11 is formed on the top coat layer 5 of FIG. 4, and FIG. 8 is a schematic sectional view of an embodiment that the moisture permeability adjustment layer 11 is formed on the top coat layer of FIG. 3.

### EXAMPLES

### (Example 1)

One part by weight of a leuco dye "BLUE-63" (manufactured by Yamamoto Chemicals Inc.), 1 part by weight of oxalic acid dihydrate (manufactured by Wako Pure Chemical Industries, Ltd.) and 10 parts by weight of magnesium chloride hexahydrate were added to 100 parts by weight of acrylic emulsion "DICNAL RS-308" (40 wt.% of solid component, manufactured by Dainippon Ink and Chemicals), and they were stirred so as to become homogeneous. Beads (acrylic urethane beads manufactured by Gifu Shellac Manufacturing Co., Ltd.) were further added such that their content in the final coating became the numeric value given in Table 1 to prepare a coating for a humidity indicator.

The printer of a known roll-to-roll method was used to print the above-described coating on a nonwoven fabric (trade name "Tyvek" manufactured by Du Pont Kabushiki Kaisha) having a thickness of 0.17 mm and a width of 100 cm, which had a PET film having a thickness of 25 µm laminated on its back surface. The printed design was a circle having a diameter of 1.5 cm inside of which was filled.

The humidity indicator of this example was stored in an environment at 23 degrees C. and a moisture of 50% for one week and a blocking state was observed by a blocking tester. The results are shown in Table 1. The blocking state was judged according to the following criteria.
○: Nonadhesive. There was no trace of adhesion, and the coated surface was separated.
△: Weak adhesion. Traces of adhesion were found in places, but the coated surface was free from abnormality.
×: Hard to peel, and the coated surface was peeled.

### (Example 2)

As the resin matrix, "Acrydic BZ-1161" manufactured by Dainippon Ink and Chemicals was diluted with methyl ethyl ketone/toluene at 3/7 (weight ratio) so as to have a viscosity of 15 to 17 seconds by a Zahn cup No. 3, applied to the print side of the humidity indicator of Example 1, and dried at 100 degrees C. to form a top coat layer having a thickness of 3 µm. Then, a blocking state was observed in the same manner as in Example 1. The results are shown in Table 1.

### (Example 3)

A top coat layer having a thickness of 3 µm was formed in the same manner as in Example 2 except that the beads having a grain diameter of 4.0 µm used in Example 1 were added to the resin matrix of Example 2 so as to become 5 wt.%. A blocking state was observed in the same manner as in Example 1. The results are shown in Table 1.

Samples prepared by pulling out and cutting off the individual humidity indicators of Examples 1 to 3 from the wound rolls were put in an environment at 23 degrees C. arid a moisture of 50 degrees C., and the blue color disappeared.

**[Table 1]**

| Average particle diameter of beads (µm) | Added amount in coating | Top coat layer | Beads in top coat layer | Blocking property |
|---|---|---|---|---|
| No beads | - | No | No | × |
| 4.0 µm | 5wt% | No | No | × |
| | | Yes | No | △ |
| | | | Yes | ○ |
| | 10wt% | No | No | × |
| | | Yes | No | ○ |
| | | | Yes | ○ |
| 7. 5µm | 5wt% | No | No | △ |
| | | Yes | No | ○ |
| | | | Yes | ○ |
| 10.1µm | 5wt% | No | No | ○ |
| | | Yes | No | ○ |
| | | | Yes | ○ |
| 1.4.7µm | 5wt% | No | No | ○ |
| | | Yes | No | ○ |
| | | | Yes | ○ |

### (Example 4)

One part by weight of a leuco dye "BLUE-63" (manufactured by Yamamoto Chemicals Inc.), 1 part by weight of oxalic acid dihydrate (manufactured by Wako Pure Chemical Industries, Ltd.) and 10 parts by weight of magnesium chloride hexahydrate were added to 100 parts by weight of acrylic emulsion. "DICNAL RS-308" (40 wt.% of solid component, manufactured by Dainippon Ink and Chemicals), and they were stirred so as to become homogeneous to thereby prepare a coating for a humidity indicator.

The printer of a known roll-to-roll method was used to print the above-described coating on a nonwoven fabric (trade name "Tyvek" manufactured by Du Pont Kabushiki Kaisha) having a thickness of 0.17 mm and a width of 100 cm which had a PET film having a thickness of 25 µm laminated on its back surface. The printed design was a circle having a diameter of 1.5 cm inside of which was filled.

Printing and drying were repeated twice with drying performed at 100 degrees C. for two seconds. After drying, beads (acrylic urethane beads manufactured by Gifu Shellac Manufacturing Co., Ltd.) were added to a resin matrix ("Acrydic BZ-11.61" manufactured by Dainippon Ink and Chemicals diluted with methyl ethyl ketone/toluene at 3/7 (weight ratio) so as to have a viscosity of 1.5 to 17 seconds by a Zahn cup No. 3) such that the content in the final, coating became the numeric values given in Table 1. The resin matrix was applied to the entire surface of a nonwoven fabric to cover the print side and dried at 100 degrees C. to form a top coat layer.

The humidity indicator of this example was stored in an environment at 23 degrees C. and a moisture of 50% for one week and a blocking state was observed by a blocking tester. The results are shown in Table 1. The blocking state was judged according to the following criteria.
○: Nonadhesive. There was no trace of adhesion, and the coated surface was separated.
×: Hard to peel, and the coated surface was peeled.

Samples prepared by pulling out and cutting off the humidity indicator of this example from the wound roll were put in an environment at 23 degrees C. and a moisture of 50 degrees C., and the blue color disappeared.

**[Table 2]**

| Average particle diameter or beads (µm) | Added amount | Thickness of transparent resin layer (µm) | Blocking property |
|---|---|---|---|
| No top coat layer | - | - | × |
| 4.0µm | 5wt% | 3 | ○ |
| | | 10 | ○ |
| | 10wt% | 3 | ○ |
| | | 10 | ○ |
| 7.5µm | 5wt% | 3 | ○ |
| | | 10 | ○ |
| 10.1µm | 5wt% | 3 | ○ |
| | | 10 | ○ |
| 14.7µm | 5wt% | 3 | ○ |
| | | 10 | ○ |

### EXPLANATION OF REFERENCE NUMERALS

- 1:: Porous base material
- 2:: Print layer
- 3:: Beads
- 4:: Coloration composition
- 5:: Top coat layer
- 6:: Beads
- 7:: Resin
- 8:: Chromatic color ink layer
- 10:: Resin film
- 11:: Moisture permeability adjustment layer

## Claims

1. A humidity indicator, wherein a coloration composition comprises at least an electron donative coloration compound, an acidic compound which is solid at ambient temperature, a substance having deliquescent property and a resin binder, the electron donative coloration compound reacts with the acidic compound to exhibit a prescribed color, a print layer has beads dispersed in the coloration composition and is supported on a base material, and the print layer has convex portions of the beads on its surface.

2. The humidity indicator according to claim 1, wherein the base material is porous.

3. The humidity indicator according to claim 1 or 2, wherein the beads are formed of a material which does not react with any constituting components of the coloration composition.

4. The humidity indicator according to any of claims 1 to 3, wherein a resin film is laminated on the back surface of the base material.

5. The humidity indicator according to any of claims 1 to 4, wherein the humidity indicator has a top coat layer which is formed of a resin covering at least the print layer

6. The humidity indicator according to claim 5, wherein the top coat layer has the beads dispersed into the resin and has the convex portions formed of the beads on its surface.

7. The humidity indicator according to any of claims 1 to 6, wherein a moisture permeability adjustment layer formed of a resin is additionally laminated on an outermost surface on the print layer side of the humidity indicator.

8. The humidity indicator according to any of claims 1 to 7, wherein a chromatic color ink layer is arranged between the print layer and the base material.

9. A method for production of a humidity indicator, comprising printing on a base material a coating for a humidity indicator, which comprises at least an electron donative coloration compound, an acidic compound which is solid at ambient temperature, a substance having deliquescent property, beads and an aqueous resin emulsion or an aqueous solution of a water-soluble polymer compound, and heating to dry to form a print layer which has the beads dispersed in the coloration composition.

10. The method for production of a humidity indicator according to claim 9, wherein the base material is porous.

11. The method for production of a humidity indicator according to claim 9 or 10, wherein the beads are formed of a material which does not react with any constituting components of the coating for the humidity indicator.

12. The method for production of a humidity indicator according to any of claims 9 to 11, wherein the coating for the humidity Indicator contains a cross-linking agent for an aqueous resin emulsion or a water-soluble polymer.

13. The method for production of a humidity indicator according to any of claims 9 to 12, wherein a resin film is previously laminated on the back surface of the base material.

14. The method for production, of a humidity indicator according to any of claims 9 to 13, whereìn the coating for the humidity Indicator is printed on the base material and heated to dry and a resin matrix in which the print layer is insoluble is coated to cover at least the print layer to form a top coat layer of a resin.

15. The method for production of a humidity indicator according to claim 14, wherein the beads are dispersed in the resin matrix.

16. A humidity indicator, wherein a print layer formed of a coloration composition, which comprises at least an electron donative coloration compound, an acidic compound which is solid at ambient temperature, a substance having deliquescent property and a resin binder, and in which the electron donative coloration compound reacts with the acidic compound to exhibit, a prescribed color, is supported on a base material, the print layer is covered with a top coat layer which has beads dispersed in resin, and the top coat layer has convex portions formed, by beads on its surface.

17. The humidity indicator according to claim 16, wherein the base material is porous.

18. The humidity indicator according to claim 16 or 17, wherein a resin film is laminated on the back surface of the base material.

19. The humidity indicator according to any of claims 16 to 18, wherein a moisture permeability adjustment layer which is formed of a resin is further laminated on the top coat layer.

20. The humidity indicator according to any of claims 16 to 19, wherein a chromatic color ink layer is arranged between the print layer and the base material.

21. A method for production of a humidity indicator, comprising printing on a base material a coating for the humidity indicator, which comprises at least an electron donative coloration compound, an acidic compound which is solid at ambient temperature, a substance having deliquescent property and an aqueous resin emulsion or an aqueous solution of a water-soluble polymer compound; heating to dry it to form a print layer which is formed of a coloration composition; and applying a resin matrix, in which the print layer is insoluble, with beads dispersed therein to cover at least the print layer to thereby form a top coat layer which has the beads dispersed in the resin.

22. The method for production of a humidity indicator according to claim 21, wherein the base material is porous.

23. The method for production of a humidity indicator according to claim 21 or 22, wherein a resin film is previously laminated on the back surface of the base material.
